# EUROPÄISCHE PATENTSCHRIFT

(11) **EP 0 992 340 B1**
(45) Veröffentlichungstag und Bekanntmachung des Hinweises auf die Patenterteilung: **29.12.2004**
(21) Anmeldenummer: 99116437.7
(22) Anmeldetag: 21.08.1999
(51) Int. Cl.: B32B 27/12, E04B 1/84, E04F 15/20

(54) **Mehrschichtige Schalldämmplatte**
Noise attenuation multilayer panel
Panneau à plusieurs couches amortissant le bruit

(30) Priorität: 05.10.1998 DE 29817735 U
(43) Veröffentlichungstag der Anmeldung: 12.04.2000
(73) Patentinhaber: VÖWA GmbH, 86399 Bobingen (DE)
(72) Erfinder: Vöst, Günther, 86399 Bobingen (DE)
(74) Vertreter: Rapp, Bertram, Dr.

(56) Entgegenhaltungen:
- DE-A- 19 637 142
- DE-U- 29 616 068
- FR-A- 2 675 178
- US-A- 5 258 585

## Beschreibung

Die Erfindung betrifft eine Vorrichtung zur Schalldämmung nach dem Oberbegriff des Anspruches 1.

Derartige Vorrichtungen sind beispielsweise aus den Druckschriften DE 44 15 502 A1, G 86 25 114.7, GB 2 306 183 und DE 1 683 255 bekannt. Diese Druckschriften lehren es, auf dem Betonboden von Gebäuden Platten aus trittschalabsorbierenden Textilfasermaterialien aufzubringen und mit einem Estrich zu überziehen.

Derartige Platten besitzen jedoch den Nachteil, daß sie an ihren Außenseiten leicht ausfransen und - zumindest so lange sie nicht verbaut sind - an den Kanten abreißen. Ferner haben sie nur ungenügende Schallabsorptionseigenschaften. Daneben sind sie aufgrund ihrer guten Wasser- und Dampfdurchlässigkeit nicht für Feuchträume geeignet und weisen in der Regel eine unregelmäßige Oberfläche auf. Der Nachteil der mangelnden Schallabsorption wäre zwar durch Wahl einer größeren Plattendicke zu lösen. Dies kommt jedoch meist nicht in Betracht, da von Architekten und Handwerkern 10 mm als obere Dickengrenze angesehen werden, um den Raum bei Bodenverlegung nicht zu niedrig zu machen.

Die US 5,258,585 beschreibt eine Vorrichtung zur Schalldämmung unter Verwendung einer Fasermatte und einer hierauf aufgeklebten Matte aus einem Schaumlaminat, wobei die Außenseiten der Vorrichtung mit einem Glasgarngelege einerseits bzw. einer Polyesterschicht andererseits ausgestattet sind. Andere Materialien für die als Dämmschicht wirkende Schaumlaminatschicht sind nicht angegeben. Bei der in dieser Schrift beschriebenen Vorrichtung kann Fliesenkleber in den offenporigen Kautschuk eindringen und somit das Trittschalldämmverhalten reduzieren. Ferner weist diese Vorrichtung eine schlechte Haftung zum Fliesenkleber auf und lässt sich nur schwer schneiden. Dadurch, dass das Produkt beim Schneiden ausfranst, hat es, nachdem es geschnitten wurde, kein schönes Aussehen mehr. Ferner ist diese Platte relativ bruchempfindlich.

Es besteht daher die Aufgabe, eine Vorrichtung zur Schalldämmung so weiterzubilden, daß sie eine bessere Schallabsorbtion und ein ansprechenderes Äußeres bei guter Stabilität der Kanten im unverbauten Zustand aufweist.

Gelöst wird diese Aufgabe mit den kennzeichnenden Merkmalen des Anspruches 1. Vorteilhafte Ausgestaltungen sind den Unteransprüchen entnehmbar.

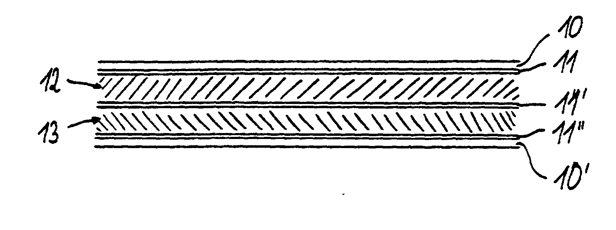

Ein Ausführungsbeispiel einer erfindungsgemäßen Dämmplatte ist der Figur dargestellt. Diese zeigt in nicht maßstäblicher Darstellung einen Querschnitt durch eine erfindungsgemäße Vorrichtung.

Die Dämmschicht 13 ist aus Gummigranulat, Polyätherschaum, Kork oder Mischungen aus diesen Materialien aufgebaut und als Pressplatte ausgebildet. Diese Dämmschicht ist weich und flexibel und wäre daher alleine als Bodenbelag ungeeignet, da Estrich, Fliesen oder sonstige Bodendeckbeläge nicht darauf aufgebracht werden können. Eine solche Anordnung würde bei Belastung aufgrund ihrer punktuellen Nachgiebigkeit zu einem Bruch des Bodendeckbelags führen.

Über der Dämmschicht 13 befindet sich eine Versteifungsschicht 12 aus einem weniger elastischen Material, im dargestellten Ausführungsbeispiel handelt es sich um eine Platte aus textilem Fasermaterial. Hierunter versteht man Fasermaterial aus Textilien oder Textilabfällen. Die Platte kann auch aus Fasern aus Zellstoff, Stroh, Flachs, Gewebe, Spanplatten, Sperrholz oder sonstigem faserartigen Material, beispielsweise nachwachsenden Rohstoffen, gebildet sein. Ferner kann sie Kunststoffe oder Kunststoffzusätze enthalten. Auch die Versteifungsschicht 12 ist mit Hilfe eines Pressverfahrens hergestellt worden.

Dämmschicht 13 und Versteifungsschicht 12 sind miteinander verklebt, und zwar mit Hilfe einer zwischen beiden Schichten angeordneten Polyethylenfolie 11', welche eine Stärke von 25 µm aufweist. Zur Herstellung des Verbundes der beiden Platten 12 und 13 werden diese, mit der dazwischen angeordneten Polyethylenfolie 11', sandwichartig aufeinander gelegt und bei einer Temperatur zwischen 140°C und 200°C und einem Druck zwischen 2 und 20 kg/cm² gepreßt. Bei der genannten Temperatur schmilzt die Polyethylenfolie 11' auf und erweicht. Hierbei verbindet sie sich innig mit den einander zugewandten Oberflächen der Dämmschicht 13 und der Versteifungsschicht 12, was - nach Abkühlen der Polyethylenfolie 11 zu einer Verklebung führt.

Auf den Außenseiten sowohl der Dämmschicht 13 als auch der Versteifungsschicht 12 ist jeweils ein Polyesterfaservlies 10 bzw. 10' aufkaschiert. Auch diese Aufkaschierung erfolgt unter Verwendung zweier Polyethylenfolien 11 bzw. 11'' unter Hitze und Druck, wie es oben zur Verbindung der Dämmschicht 13 und der Versteifungsschicht 12 beschrieben wurde. Auch hier besteht also eine innige Verbindung zwischen den Außenseiten der Platten 12 bzw. 13 und den Polyestherfaservliesen 10 bzw. 10' durch die Klebewirkung der dazwischen liegenden Polyethylenfolien.

Die Reihenfolge der Verklebung zwischen den einzelnen Schichten und Vliesen ist von untergeordneter Bedeutung. Das Zusammenfügen der gesamten Vorrichtung kann in nahezu beliebiger Reihenfolge oder auch gleichzeitig mit allen Schichten erfolgen.

Die so hergestellte Vorrichtung wird mit ihrer weichen Dämmschicht 13 nach unten beispielsweise auf einem Betonboden verlegt. Auf die Vorrichtung wird anschließend der Estrich aufgebracht, auf welchem anschließend ein handelsüblicher Bodenbelag, beispielsweise Fliesen, Parkett, Laminat oder ähnlich aufgebracht werden kann.

Wird dieser Estrichaufbau durch eine punktuelle Belastung beansprucht, erfolgt eine Kraftübertragung der Last über den Bodenbelag und den Estrich auf die Vorrichtung. In diese wird der Kraftfluß durch die Versteifungsschicht 12 so verteilt, daß die Belastung nicht punktuell ist, sondern über größere Fläche verteilt auf die darunter liegende Dämmschicht 13 weitergeleitet wird.

Alternativ zur vorbeschriebenen Verwendung kann die Vorrichtung auch auf den Estrich aufgebracht werden, wobei dann auf die Trittschalldämmvorrichtung der abschließende Bodenbelag aufgebracht wird.

Verglichen mit den aus dem Stand der Technik bekannten Schalldämmvorrichtungen weist die vorliegende Vorrichtung eine sehr gute Trittschalldämmung von über 20 dB auf. Durch die Kaschierung mit dem Polyesterfaservlies ergibt sich auch im unverbauten Zustand eine saubere, gleichmäßige Oberfläche, welche es verhindert, daß Kanten abreißen und der Platte ein unschönes Aussehen geben oder diese nicht mehr brauchbar werden lassen. Durch die vollflächige Verklebung sowohl zwischen Dämmschicht 13 und Versteifungsschicht 12 als auch zwischen diesen beiden Schichten und den Polyesterfaservliesen 10 bzw. 10 wird eine hervorragende Dampfsperre erreicht, da das erweichte Polyethylen 11, 11 und 11 praktisch keinen Dampf hindurchtreten läßt. Dies ist insbesondere verglichen mit dem vorbekannten Aufbringen von Sprühkleber ein Vorteil, da hier nur punktuell verklebt wird und genügend Fläche zum Dampfdurchtritt verbleibt. Aus demselben Grund ist die Oberfläche wesentlich ebener und gleichmäßiger als bei der Verwendung von Sprühkleber.

Die Verwendung des Polyesterfaservlieses hat außerdem den Vorteil, daß eine beliebige Farbe gewählt werden kann, beispielsweise die Hausfarbe des Plattenherstellers. Falls in Ausnahmefällen die Vorrichtung nicht weiter verkleidet werden soll weist sie bereits eine ansprechende Farbe auf.

Die beschriebene Vorrichtung kann sowohl als Schalldämmvorrichtung für den Boden, also als Trittschalldämmvorrichtung eingesetzt werden als auch als Schalldämmvorrichtung für Wände von Gebäuden oder für andere Zwecke, beispielsweise innerhalb von Kraftfahrzeugen.

## Patentansprüche

1. Vorrichtung zur Schalldämmung mit einer elastischen Dämmschicht (13), welche aus Gummigranulat, Polyätherschaum, Kork oder einer Mischung aus diesen Materialien aufgebaut ist und einer auf dieser Dämmschicht (13) aufgeklebten Versteifungsschicht (12), **dadurch gekennzeichnet, daß** die Versteifungsschicht (12) im wesentlichen textiles Fasermaterial enthält und auf den Außenseiten sowohl der Dämmschicht (13) als auch der Versteifungsschicht (12) jeweils ein Faservlies (10, 10') mit Hilfe einer dazwischen liegenden Polyethylenfolie (11, 11") aufkaschiert ist.

2. Vorrichtung nach Anspruch 1, **dadurch gekennzeichnet, daß** auch die Dämmschicht (13) mit der Versteifungsschicht (12) über eine Polyethylenfolie (11) verklebt ist.

3. Vorrichtung nach einem der Ansprüche 1 oder 2, **dadurch gekennzeichnet, daß** die oder jede Polyethylenfolie (11, 11, 11) durch Erweichen aufgrund von Erhitzung während des Herstellungsprozesses innig mit den angrenzenden Oberflächen der Dämmschicht (13), der Versteifungsschicht (12) und der Polyesterfaservliese (10, 10') verbunden ist.

4. Vorrichtung nach einem der voranstehenden Ansprüche, **dadurch gekennzeichnet, daß** das oder jedes Faservlies (10, 10') ein Polyesterfaservlies mit einer Stärke zwischen 0,05 und 0,5 mm ist.

5. Vorrichtung nach einem der voranstehenden Ansprüche, **dadurch gekennzeichnet, daß** die oder jede Polyethylenfolie (11) eine Stärke zwischen 5 µm und 50 µm aufweist.

6. Vorrichtung nach einem der voranstehenden Ansprüche, **dadurch gekennzeichnet, daß** mindestens ein Faservlies (10) eine farbige Gestaltung aufweist.

## Claims

1. Device for sound insulation with an elastic insulating layer (13) which is constructed of rubber granules, polyether foam, cork or a mixture of these materials, and with a stiffening layer (12) which is bonded on this insulating layer (13), **characterised in that** the stiffening layer (12) essentially comprises textile fibre material, and the outsides of both the insulating layer (13) and the stiffening layer (12) are in each case lined with a fibre fleece (10, 10') with the aid of an interposed polyethylene film (11, 11").

2. Device according to claim 1, **characterised in that** the insulating layer (13) is also bonded to the stiffening layer (12) through a polyethylene film (11').

3. Device according to one of claims 1 or 2, **characterised in that** the or each polyethylene film (11, 11', 11") is intimately connected to the adjoining surfaces of the insulating layer (13), the stiffening layer (12) and the polyester fibre fleeces (10, 10') by softening due to heating during the manufacturing process.

4. Device according to one of the preceding claims, **characterised in that** the or each fibre fleece (10, 10') is a polyester fibre fleece with a thickness of between 0.05 and 0.5 mm.

5. Device according to one of the preceding claims, **characterised in that** the or each polyethylene film (11) has a thickness of between 5 µm and 50 µm.

6. Device according to one of the preceding claims, **characterised in that** at least one fibre fleece (10) is coloured.

## Revendications

1. Dispositif amortissant le bruit avec une couche d'amortissement élastique (13), laquelle est constituée de granulat caoutchouteux, de mousse polyéther, de liège ou d'un mélange de ces matériaux et avec une couche de renforcement (12) collée à cette couche d'amortissement (13), **caractérisé en ce que** la couche de renforcement (12) contient un matériau fibreux sensiblement textile, et respectivement un tissu fibreux (10, 10') est contrecollé sur les côtés extérieurs aussi bien de la couche d'amortissement (13) que de la couche de renforcement (12), à l'aide d'un film de polyéthylène (11, 11') situé entre celles-ci.

2. Dispositif selon la revendication 1, **caractérisé en ce que** la couche d'amortissement (13) est collée à la couche de renforcement (12) par l'intermédiaire d'un film de polyéthylène (11').

3. Dispositif selon l'une des revendications 1 ou 2, **caractérisé en ce que** le ou chaque film de polyéthylène (11, 11', 11'') est relié, par un ramollissement dû au réchauffement pendant le processus de fabrication de façon interne, aux surfaces adjacentes de la couche d'amortissement (13), de la couche de renforcement (12) et du tissu fibreux en polyester (10, 10').

4. Dispositif selon l'une des revendications précédentes, **caractérisé en ce que** le ou chaque tissu fibreux (10, 10') est un tissu fibreux en polyester présentant une épaisseur comprise entre 0,05 et 0,5 mm.

5. Dispositif selon l'une des revendications précédentes, **caractérisé en ce que** le ou chaque film de polyéthylène (11) présente une épaisseur comprise entre 5 µm et 50 µm.

6. Dispositif selon l'une des revendications précédentes, **caractérisé en ce qu'**au moins un tissu fibreux (10) comprend une configuration colorée.
